## Europäisches Patentamt
## European Patent Office
## Office européen des brevets

(19)

(11) Veröffentlichungsnummer: **0 026 756**

**A1**

(12) # EUROPÄISCHE PATENTANMELDUNG

(21) Anmeldenummer: **80890105.2**

(22) Anmeldetag: **22.09.80**

(51) Int. Cl.³: **B 65 D 1/26**
**B 65 D 1/40, B 65 D 85/72**

(30) Priorität: **02.10.79 AT 6424/79**

(43) Veröffentlichungstag der Anmeldung:
**08.04.81 Patentblatt 81/14**

(84) Benannte Vertragsstaaten:
**BE CH DE FR GB IT LI LU NL SE**

(71) Anmelder: **Sterner, Franz**
**Mühlstrasse 21**
**A-4616 Marchtrenk(AT)**

(72) Erfinder: **Sterner, Franz**
**Mühlstrasse 21**
**A-4616 Marchtrenk(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Vorratsbehälter für Heissgetränke und Heizvorrichtung für diesen Behälter.**

(57) Bei einem als Vorratsbehälter, insbesondere Konserve für Heißgetränke ausgebildeten Portionsbehälter (2) in der Grundform eines sich nach unten verjüngenden Bechers mit abreißbarem oder aufschneidbarem Deckel ist wenigstens der Mantel eines Unterteiles nachgiebig und unter dem Druck des Behälterinhaltes begrenzt elastisch verformbar ausgebildet und für den Eingriff mit einer zur Erhitzung des Behälterinhaltes dienenden Heizfläche (6) bestimmt, an die er sich durch seine Nachgiebigkeit anschmiegen kann.

EP 0 026 756 A1

BEZEICHNUNG GEÄNDERT
siehe Titelseite

Als Vorratsbehälter, insbesondere Konserve für
Heißgetränke ausgebildeter Portionsbehälter

Die Erfindung betrifft einen als Vorratsbehälter, insbesondere Konserve für Heißgetränke ausgebildeten Portionsbehälter, der die Grundform eines
über einen abreiß- oder aufschneidbaren Deckel dicht
verschlossenen Bechers aufweist, wobei ein mit dem
Behälterinhalt in Berührung stehender Wandungsteil
des Vorratsraumes nachgiebig ausgebildet und für den
Eingriff mit einer zur Erhitzung des Behälterinhaltes
dienenden Heizfläche bestimmt ist, an die er sich
durch seine Nachgiebigkeit anschmiegen kann.

Die Erfindung betrifft auch eine Heizeinrichtung
zum Erhitzen solcher Portionsbehälter, die mit einer
elektrisch beheizten Heizfläche ausgestattet ist.

Es wird angestrebt, Verpackungsbehälter der gegenständlichen Art möglichst leicht und mit geringem Kostenaufwand herstellbar auszubilden, so daß vor allem angestrebt wird, die Behälter wenigstens zum Großteil aus
Kunststoff, gegebenenfalls aber auch aus Metallfolie
herzustellen, wobei für die Fertigung des Behälters
möglichst wenige Arbeitsgänge notwendig sein sollen.
Für Kaltgetränke ist die rationelle Fertigung der
Behälter durch bekannten Kunststoffbeutel und -becher
bzw. durch Papierbecher mit innen aufkaschierter Aluminiumfolie bereits in zufriedenstellender Weise gelöst.

Heißgetränke und auch flüssige oder halbflüssige Speisen, beispielsweise Suppen, sollen möglichst noch in dem gleich das Eß- bzw. Trinkgefäß bildenden Portionsbehälter auf die richtige Verzehrtemperatur gebracht werden können. Dabei ist ganz besonders zu beachten, daß auch hier möglichst kostengünstige Behälter angestrebt werden müssen, da sonst die Verpackung wesentlich teurer als das Getränk od. dgl. wird. Ferner ist es notwendig, die Erwärmung bzw. Erhitzung des Behälterinhaltes innerhalb einer verhältnismäßig kurzen Zeit vorzunehmen.

Zur Lösung dieser Aufgaben wird nach der DE-OS 28 25 475 ein im wesentlichen formstabiler Portionsbehälter aus Kunststoff vorgeschlagen, bei dem der Becherkörper zur Verbesserung der Formstabilität mit Sicken und Einpressungen versehen ist. Der Becherkörper besitzt oben um die Becheröffnung einen breiten, in sich steifen Randflansch, auf den ein Abschlußdeckel aus einer Metallfolie dicht aufgesetzt wird.

Zur Erwärmung des Behälterinhaltes wird der Portionsbehälter mit geschlossen bleibendem, nach unten weisendem Deckel in eine nur für diesen Behälter geeignete Heizeinrichtung eingeführt, die einen bombierten, federnd nach oben drückenden Heizkopf aufweist. Ferner sind mit dem Randflansch des Behälter zusammenwirkende Schiebeführungen vorhanden, in die der Behälter eingeführt wird, bis der Heizkopf zentrisch zum Deckel steht und diesen elastisch nach innen drückt. Der Behälterinhalt wird durch den so verformten Deckel hindurch aufgeheizt, wobei mit relativ großen Übertemperaturen am Heizkopf gearbeitet wird, um eine rasche Erhitzung zu gewährleisten.

Nachteilig bei der geschilderten Lösung des aufgezeigten Problemes ist es, daß der Behälterinhalt während des Beheizungsvorganges unter Überdruck steht,

- 3 -

daß steife und daher immer noch relativ teure Behälter benötigt werden, um überhaupt die Handhabung zu ermöglichen, daß die Gefahr besteht, daß die den Deckel bildende Folie beim Eindrücken des Heizkopfes einreißt bzw. undicht wird, so daß es zu einem Verlust des Behälterinhaltes und zu einer Verschmutzung der Heizeinrichtung kommt und daß schließlich der Behälter vor dem Gebrauch erst umgedreht und unter Anfassung der heißen Deckfolie geöffnet werden muß. Wegen der hohen Übertemperatur des Heizkopfes kann es bei dick- oder halbflüssigen Speisen, beispielsweise Suppen, während der Beheizung zu einem Ablagern der Bestandteile dieser Speisen am Deckel kommen, so daß diese Bestandteile verlorengehen und nur eine erhöhte Beschmutzungsgefahr bei der Handhabung des Deckels bedingen. Durch das Eindrücken des Deckels während des Heizvorganges soll im wesentlichen nur eine lagerichtige Halterung des Vorratsbehälters in der eigens für ihn konstruierten Heizeinrichtung erzielt werden. Die Heizeinrichtung wird durch die besondere Ausgestaltung mit dem beweglichen Heizkopf und die weiteren notwendigen Verrastungs-, Schalt- und Steuereinrichtungen aufwendig und dabei störungsanfällig. Aus Sicherheitsgründen muß dafür gesorgt werden, daß der Heizkopf beim Abziehen des Behälters versenkt wird, um ein Anfassen des heißen Heizkopfes zu vermeiden.

Selbstverständlich sind für Heißgetränke normale Blechkonserven bekannt, die im Wasserbad oder durch Aufstellen auf passende Heizgeräte erwärmt werden können. Hier ergibt sich immer der Nachteil, daß zunächst die Konserve teuer wird und anderseits das die Wärme gut leitende Blech kein brauchbares Trinkgefäß für Heißgetränke darstellt. Es wurden auch schon sogenannte Heizkonserven entwickelt, die jeweils aus einem ein Getränk oder ein sonstiges Nahrungs- oder Genußmittel aufnehmenden Trinkgefäß und einem mit dem Gefäßinhalt in wärmeleitender Verbindung stehenden Heizeinsatz bestehen, wobei der Heizeinsatz bei ihrer Reaktion wärmeabgebende Substanzen enthält, die über einen Auslöser zur Reaktion gebracht werden können. Nachteilig ist hier, daß der gesamte Heizbehälter ein im Verhältnis zum genießbaren Inhalt großes Volumen erhält und sich wieder ein ungünstiges Kostenverhältnis wegen der im Verhältnis zum Inhalt sehr teuren Konserve und ein hohes Leergewicht der Konserve ergibt.

Es sind Flaschenwärmer für Säuglingsflaschen bekannt, die aus einem beheizten, mit einem Thermostaten versehenen Flaschenständer bestehen und die reine Warmhalteeinrichtungen darstellen, in die die Flaschen schon vorgewärmt eingebracht werden. Wegen der Herstellungstoleranzen ist es notwendig, daß zwischen den Seitenwänden der Einstellvertiefung des Flaschenständers und der Außenseite der Flasche ein Luftspalt freibleibt. Es ergibt sich daher zwischen Heizeinrichtung und Flasche nur ein schlechter, für die reine Warmhaltung aber ausreichender Wärmeübergang.

Aufgabe der Erfindung ist die Schaffung eines Vorratsbehälters der genannten Art, der gegenüber den bekannten Vorratsbehältern leichter und billiger in der Herstellung wird und bei dem für die Erwärmung des Behälterinhaltes nur einfache Heizeinrichtungen benötigt werden. Eine Teilaufgabe der Erfindung liegt in der Schaffung einer einfachen, geeigneten Heizeinrichtung.

Ein erfindungsgemäßer Portionsbehälter ist dadurch gekennzeichnet, daß der nachgiebige Wandungsteil wenigstens aus dem Mantel des eine sich nach unten verjüngende Grundform aufweisenden Portionsbehälters besteht und dieser Unterteil unter dem Druck des Behälterinhaltes begrenzt elastisch verformbar ausgebildet, insbesondere dünnwandig aus Kunststoff hergestellt ist.

Derartige Behälter können einfach und billig hergestellt und nach Gebrauch leicht vernichtet bzw. bei entsprechender Form ineinander gestapelt oder zur Verringerung des Stauvolumens zusammengedrückt werden. Wegen der dünnwandigen Herstellung und deshalb, weil sich die Behälter unter dem Druck ihres Inhaltes an die Wandung eines zur Beheizung verwendeten Gefäßes anschmiegen, ist trotz der bevorzugten Herstellung aus Kunststoff ein guter Wärmeübergang von der jeweiligen Heizfläche auf den Behälterinhalt gewährleistet, und es kann durch entsprechende Behälterform eine große Wärmeübergangsfläche erzielt werden, weshalb in weiterer Folge mit nur relativ geringen Übertemperaturen der Heizflächen gegenüber der gewünschten Endtemperatur des Behälterinhaltes gearbeitet werden kann, so daß keine Gefahr eines Versengens des Behälters selbst besteht.

Für den Transport der als Konserve verwendeten Portionsbehälter werden vorzugsweise Schutzpackungen oder immer wieder verwendbare Boxen verwendet. Im einfachsten Fall besitzt der Portionsbehälter einen durch einen Abreißdeckel od. dgl. verschlossenen Vorratsraum mit dem jeweiligen Getränk od. dgl. Es ist aber auch möglich, den Vorratsraum in zwei oder mehrere Kammern zu unterteilen, von denen die größere die Flüssigkeit, meist Wasser, enthält und die andere bzw. anderen Vorratsräume für Zutaten bilden. Solche Zutaten können Kaffee- oder Tee-Extrakte, Süßstoffe, Gewürze usw. sein. Aufreißverschlüsse können dazu dienen, beim Öffnen des Behälters ein wahlweises Einbringen der Zutaten in die erhitzte Flüssigkeit zu ermöglichen. Im Bedarfsfall kann der Behälter schon vor dem oder während des Aufheizvorganges geöffnet werden, da er ja in seiner Gebrauchslage bei nach oben weisender Öffnung erhitzt wird.

Nach einer Weiterbildung schließt an den nachgiebigen Unterteil des Portionsbehälters ein formstabiler, als Stützring ausgebildeter Oberteil an, der einen gegenüber dem Unterteil abgesetzt vergrößerten Durchmesser aufweist, zugleich einen Trinkrand bildet und mit einem Handgriff versehen ist. Verwendet man eine Heizeinrichtung, deren Heizfläche aus der Wandung eines nach oben offenen Gefäßes besteht, das sich nach oben erweitert und in seiner Innenform und Höhe an die Form und Höhe des Behälterunterteiles angepaßt ist, dann wird ein Portionsbehälter der letztgenannten Art beim Einsetzen des Behälterunterteiles in das beheizte Gefäß mit dem Stützring oben am Gefäßrand aufrasten. Der Stützring ermöglicht es auch, den Behälter in einer Verpackung oder einer Vorratsbox abzustützen. Ferner wird durch diesen Ring und den ausgeprägten Trinkrand der Gebrauch des Behälters als Trinkgefäß sowie die übrige Handhabung erleichtert.

Das beheizte Gefäß der Heizeinrichtung kann in einem Ständer untergebracht sein, der gegebenenfalls feststehend, auch in Kraftfahrzeugen, montierbar ist. Für Ausgabestationen von Heißgetränken, beispielsweise Imbißstationen, Bordküchen in Flugzeugen usw., können mehrere beheizbare und je eine Heizeinrichtung für eine Konserve bildende Gefäße zu Batterien vereinigt sein.

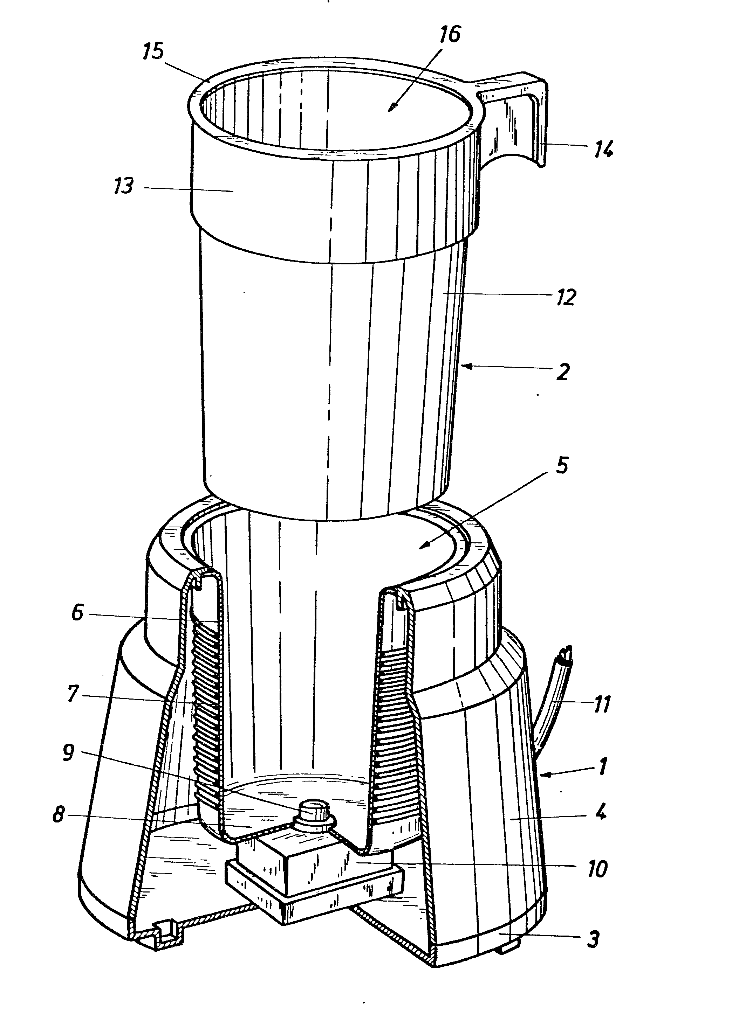

In der Zeichnung sind als Ausführungsbeispiel ein Portionsbehälter und eine zugehörige Heizeinrichtung im Schaubild bzw. schaubildlich im Teilschnitt dargestellt.

Wie schon erwähnt wurde, sind eine Heizeinrichtung 1 und ein Portionsbehälter 2 dargestellt. Bei der Heizeinrichtung 1 ist in einem aus zwei Teilen 3 und 4 bestehenden Kunststoffgehäuse ein Metallgefäß 5 in Form eines nach oben offenen Einsatzes angebracht, an dessen Mantel 6 außenseitig ein elektrischer Widerstandheizkörper 7 angebracht ist. Das Gefäß hat die Grundform eines an der Basis offenen und mit dieser Basis nach oben weisenden Kegelstumpfes. Durch den Boden 8 des Gefäßes 5 ragt der Fühler 9 eines Druckschalters 10 zum Ein- und Ausschalten des Widerstandsheizkörpers. In Serie mit diesem Schalter 10 kann noch ein Temperaturwächter geschaltet sein. Der Heizkörper 7 ist über ein Anschlußkabel 11 mit einem Steckanschluß verbindbar. Man kann auch eine Umschaltmöglichkeit von Netz- auf Batteriestrom vorsehen, um das Gerät wahlweise vom Versorgungsnetz aus oder von einer Kraftfahrzeugbatterie zu betreiben.

Der Portionsbehälter 2 besitzt einen der Höhlung des Gefäßes 5 im wesentlichen angepaßten Unterteil 12, der begrenzt elastisch verformbar, dünnwandig aus Kunststoff hergestellt ist. Dabei kann dieser Unterteil im Tiefziehverfahren aus einer Kunststoffolie, z.B. einer Polyäthylenfolie geformt sein, wobei aus der Folie ein in seiner Grundform konischer Becher gebildet wird, der oben in einem Stützring 13 gehalten ist. Dieser als Kunststoffpreßteil oder -spritzteil ausgeführte Stützring 13 rastet beim Einsetzen des Unterteiles 12 in das Gefäß 5 oben auf dessen Rand auf. Am Ring 13 ist ein Handgriff 14 einteilig angespritzt. Nach einer anderen Möglichkeit sind der Unterteil 12 und der Stützring 13 mit dem Handgriff 14 einteilig mit verschiedenen Wandstärken aus Kunststoff gespritzt, wobei gegebenenfalls im Ringbereich zwecks Versteifung Wellen, Sicken oder Riffelungen vorgesehen werden. Der obere Rand 15 des Ringes 13 bildet jeweils einen Trinkrand. Die von diesem Trinkrand 15 bestimmte Öffnung 16 des Behälters wird bis zum Gebrauch durch eine abreißbare oder aufschneidbare Folie dicht verschlossen gehalten.

Patentansprüche:

1.    Als Vorratsbehälter, insbesondere Konserve für Heißgetränke ausgebildeter Portionsbehälter, der die Grundform eines über einen abreiß- oder aufschneidbaren Deckel verschlossenen Bechers aufweist, wobei ein mit dem Behälterinhalt in Berührung stehender Wandungsteil des Vorratsraumes nachgiebig ausgebildet und für den Eingriff mit einer zur Erhitzung des Behälterinhaltes dienenden Heizfläche bestimmt ist, an die er sich durch seine Nachgiebigkeit anschmiegen kann, dadurch gekennzeichnet, daß der nachgiebige Wandungsteil wenigstens aus dem Mantel eines Unterteiles (12) des eine sich nach unten verjüngende Grundform aufweisenden Portionsbehälters besteht und dieser Unterteil unter dem Druck des Behälterinhaltes begrenzt elastisch verformbar ausgebildet, insbesondere dünnwandig aus Kunststoff hergestellt ist.

2.    Portionsbehälter nach Anspruch 1, dadurch gekennzeichnet, daß an den nachgiebigen Unterteil (12) des Portionsbehälters (2) ein formstabiler, als Stützring (13) ausgebildeter Oberteil anschließt, der einen gegenüber dem Unterteil abgesetzt vergrößerten Durchmesser aufweist, zugleich einen Trinkrand (15) bildet und mit einem Handgriff (14) versehen ist.

3.    Heizeinrichtung zum Erhitzen von Portionsbehältern nach Anspruch 1 oder 2, mit einer elektrisch beheizten Heizfläche, dadurch gekennzeichnet, daß die Heizfläche aus der Wandung eines nach oben offenen Gefäßes (5) besteht, das sich nach oben erweitert und in seiner Innenform und Höhe an die Form und Höhe des Behälterunterteiles angepaßt ist.

Europäisches Patentamt

**EUROPÄISCHER RECHERCHENBERICHT**

Nummer der Anmeldung

EP 80890105.2

| EINSCHLÄGIGE DOKUMENTE | | | KLASSIFIKATION DER ANMELDUNG (Int Cl ) |
|---|---|---|---|
| Kategorie | Kennzeichnung des Dokuments mit Angabe soweit erforderlich, der maßgeblichen Teile | betrifft Anspruch | |
| | GB - A - 1 459 173 (SUNBEAM CORPORATION) <br> + Fig. 2,3 + <br> -- | 1,2 | B 65 D 1/26 <br> B 65 D 1/40 <br> B 65 D 85/72 |
| | CH - A5 - 609 853 (HAUPT A.) <br> + Gesamt + <br> -- | 1,3 | |
| | CH - A - 509 065 (BELLAPLAST) <br> + Fig. 1,3 + <br> -- | 1,2 | |
| D | DE - A1 - 2 825 475 (FERRERO) <br> + Gesamt + <br> ---- | | |

**RECHERCHIERTE SACHGEBIETE (Int Cl )**

B 65 D 1/00

B 65 D 85/00

A 47 J 36/00

A 47 G 19/00

H 05 B 3/00

**KATEGORIE DER GENANNTEN DOKUMENTE**

X: von besonderer Bedeutung

A: technologischer Hintergrund

O: nichtschriftliche Offenbarung

P Zwischenliteratur

T: der Erfindung zugrunde liegende Theorien oder Grundsätze

E: kollidierende Anmeldung

D: in der Anmeldung angefuhrtes Dokument

L: aus andern Grunden angefuhrtes Dokument

&: Mitglied der gleichen Patentfamilie, übereinstimmendes Dokument

| X | . Der vorliegende Recherchenbericht wurde für alle Patentansprüche erstellt. |
|---|---|

| Recherchenort | Abschlußdatum der Recherche | Prüfer |
|---|---|---|
| WIEN | 09-12-1980 | JANC |

EPA form 1503.1 06.78